# FASCICULE DE BREVET EUROPEEN

(11) **EP 1 195 775 B1**
(45) Date de publication et mention de la délivrance du brevet: **02.11.2005**
(21) Numéro de dépôt: 01402575.3
(22) Date de dépôt: 05.10.2001
(51) Int. Cl.: H01B 3/46, C09D 183/10

(54) **Composition de vernis, procédé de fabrication de cette composition, fil de bobinage revetu et bobine resultant**
Lackzusammensetzung, Verfahren zur Herstellung; Wickeldraht für elektrische Spule und so hergestellte Spule
Coating paint composition, process for preparing this composition, wire winding and a coil

(30) Priorité: 09.10.2000 FR 0012874
(43) Date de publication de la demande: 10.04.2002
(73) Titulaire: Nexans, 75008 Paris (FR)
(72) Inventeur: Fournier, Jérôme, 69006 Lyon (FR); Danel, Léonard, 02300 Neuflieux (FR); Preux, Laurent, 38460 Chozeau (FR); Studer, Virginie, 69680 Chassieu (FR)
(74) Mandataire: Feray, Valérie

(56) Documents cités:
- EP-A- 0 304 022
- EP-A- 0 447 789
- GB-A- 2 210 045
- US-A- 4 503 124
- US-A- 4 760 296
- US-A- 4 769 287
- US-A- 5 654 095
- PATENT ABSTRACTS OF JAPAN vol. 1996, no. 05, 31 mai 1996 (1996-05-31) & JP 08 012943 A (NICHIBAN KENKYUSHO:KK), 16 janvier 1996 (1996-01-16) & DATABASE WPI/DERWENT [en ligne] AN 1996-112920,

## Description

L'invention porte sur des vernis hybrides chargés, en particulier pour des fils de bobinage et des fils de bobinage recouverts de tels vernis.

Des fils de bobinage isolés par des couches de vernis sont utilisés par exemple dans la fabrication de bobines pour des convertisseurs et variateurs de fréquences.

Les vernis doivent outre leur fonction primaire d'isolation présenter une résistance thermique suffisante. Les fils de bobinage standards, constitués d'un fil en matériau conducteur, en général en cuivre sont recouverts par une ou plusieurs couches de vernis de type polyester imide (PEI) et/ou polyamide imide (PAI) de la classe thermique la plus élevée, présentent une résistance thermique de 20 000 heures à 200°C. L'utilisation de polyimide (PI) conduit à l'augmentation de la classe thermique jusqu'à 250°C aux dépens toutefois de la résistance aux décharges partielles.

L'apparition de contraintes thermiques plus sévères, notamment dans les applications de moteurs à convertisseur de fréquence, requiert cependant la mise au point de vernis ayant une meilleure tenue à la chaleur.

Ainsi, on connaît depuis peu des vernis comportant en une seule phase des parties organiques et des parties minérales. Ces vernis sont également appelés « vernis hybrides ». De tels vernis à base de précurseurs céramiques ont été décrits par K.Asano, K.Suzuki, S.Itonaga et Y.Tetsu, Hitachi Cable Review N°16 (Août 1997), 67-74. En raison de la fragilité et de la dureté de la céramique, le précurseur tel qu'un silicone ou un polycarboxysilane, n'est transformé en céramique qu'après l'enroulement en bobine. Ces vernis présentent une résistance thermique jusqu'à 400°C après un traitement thermique particulier. Cependant, il semble que cette solution n'ait pas abouti à une application à échelle industrielle.

Le bobinage des fils vernis requiert par ailleurs une résistance mécanique considérable associée à une souplesse adéquate afin que les vernis ne forment pas de fissures, en particulier lors de l'enroulement des fils en bobine.

Enfin, de nouvelles applications, par exemple dans les convertisseurs, exigent une résistance aux pics de tension particulièrement élevée. En effet, les fils de bobinage peuvent être exposés à des pics transitoires importants. Ces pics peuvent de surcroît présenter des vitesses de montée excédant 1 kV/µs. Le fil de bobinage peut en outre être exposé à ce type de pics de tension à une température élevée, à savoir supérieure à 180°C. Ce type de contraintes peut donner lieu à des décharges partielles indésirables. Ces décharges entraînent le vieillissement électrique de l'isolation par l'érosion du revêtement de vernis. En présence d'un gaz tel que l'air, on parle aussi de « vieillissement Corona ».

Afin de procurer une isolation durable aux fils de bobinage, le vernis doit donc résister à de tels pics de tension transitoires afin d'éviter l'endommagement du moteur et des pannes de fonctionnement prématurées.

On connaît des vernis pour fils de bobinage formulés spécialement pour résister à des décharges de type Corona. Dans le document US-4 503 124 est décrite par exemple une composition de vernis comprenant une résine polymère chargée de particules d'alumine de taille inférieure à 0,1 µm. Cependant, il s'avère que ces vernis présentent une résistance thermique insatisfaisante.

Dans le document US-5 654 095 est décrit un revêtement de protection résistant à des pics de tension proches de 3000 V, des temps de montée inférieurs à 100kV/µs et des élévations de température jusqu'à 300°C. Ce revêtement de protection comprend une résine et une charge sous forme de particules de taille inférieure au micromètre tels que des oxydes de métal, la silice, et des argiles. Une telle protection requiert toutefois l'application obligatoire d'une couche d'isolation de base et entraîne ainsi une complication du procédé. En outre, la résistance mécanique de ces vernis laisse à désirer, en particulier lorsque les fils revêtus de vernis sont soumis à des déformations mécaniques avant l'enroulement. Ce type de fils peut alors perdre sa résistance au vieillissement Corona. Il a été observé que la durée de vie peut baisser de jusqu'à 90% suite à un étirement préalable de 10%.

Par ailleurs, le document WO 98/25277 décrit un vernis hybride obtenu par condensation en présence d'eau de composés du silicium et éventuellement d'autres éléments. L'addition de fines particules de verre silanisé comme charge est mentionnée. Ces vernis présentent une résistance médiocre aux décharges électriques partielles à haute fréquence et sont insatisfaisants même à basse fréquence à des températures excédant 150°C.

Enfin, le document EP-0 768 680 décrit un vernis hybride auquel peuvent être ajoutées des particules de SiO₂ d'une taille comprise entre 50 et 100 nm pour augmenter la proportion minérale du vernis. Un quelconque effet au niveau de la résistance aux décharges partielles ou des pics de tension dû à la présence de ces particules dans le vernis n'est pas mentionné.

Il existe donc un besoin de disposer de fils de bobinage ayant les propriétés mentionnées ci-dessus et en particulier une résistance aux décharges partielles et aux pics de tension améliorées à température élevée.

Le vernis selon invention permet de pallier les inconvénients de l'art antérieur.

Plus particulièrement, l'invention propose donc une composition comprenant :
a) un copolymère obtenu à partir d'une résine thermoplastique ou thermodurcissable choisie parmi le groupe comprenant le polyamide imide (PAI), le polyester imide (PEI), le polyimide (PI), le polyvinylacétal (PVA) et leurs mélanges et contenant au moins un alkoxysilane ; et
b) une charge minérale choisie parmi les composés du B, Al, Ti, Zn, Zr, Cr, Fe, les silicates ainsi que leurs mélanges.

L'invention propose donc un vernis hybride et composite qui permet la fabrication de fils de bobinage présentant de manière inattendue une résistance aux décharges partielles très accrue par rapport aux fils revêtus des vernis de l'art antérieur, notamment aux températures élevées.

En effet, les inventeurs ont constaté à partir d'études menées dans le domaine que certaines charges minérales jouent un rôle capacitif grâce à leur constante diélectrique élevée et contrôlent ainsi les décharges partielles apparaissant dans l'isolant sous l'effet des contraintes électromagnétiques. Les charges dans le vernis selon invention ont donc pour but non pas un renfort mécanique, mais l'homogénéisation des charges électriques. C'est pour cela que des charges de faible constante diélectrique ou de faible surface spécifique ne conviennent pas.

Lors de contraintes électromagnétiques et de l'apparition de décharges partielles appliquées à un fil revêtu d'une composition selon l'invention, les charges électriques induites ne sont pas dissipées mais stockées à la surface des grains de charge minérale. Un tel stockage homogénéise le potentiel dans la couche hybride chargée selon l'invention et évite la dégradation de l'isolant et le claquage diélectrique, augmentant ainsi la durée de vie de l'isolant. L'accumulation des charges électriques et les valeurs relativement élevées de la dissipation diélectrique impliquent toutefois une accumulation d'énergie principalement thermique dans le matériau et donc un mécanisme de dégradation thermique.

Or ce mécanisme de dégradation peut être ralenti grâce à la plus grande résistance thermique d'une matrice hybride organique/minérale.

Ainsi, la conjonction des deux types de matériaux permet d'augmenter sensiblement la durée de vie des fils sous forte contrainte (thermique et électromagnétique). Par ailleurs, les fils de bobinage ainsi recouverts présentent même sous contrainte moins drastique un écart type sur la durée de vie moins élevé.

Selon un mode de réalisation avantageux, le copolymère est obtenu par addition de 10 à 50%, de préférence 20 à 40% en poids d'alkoxysilane.

L'alkoxysilane peut être un tétraalkoxysilane, tel que le tétraéthoxysilane (TEOS), ou un trialkoxysilane, tel que le triméthoxysilane ou l'aminopropyl-triméthoxysilane. Cependant, il est également possible d'envisager d'autres composés du silicium susceptibles de copolymériser avec le polymère.

La résistance aux décharges partielles, aux pics de tension et au vieillissement Corona est notablement améliorée par addition de charges minérales choisies parmi les oxydes ou les nitrures de B, Al, Ti, Zn, Zr, Cr ou Fe, de préférence le dioxyde de titane, ou encore parmi les silicates tels que les argiles, en particulier les argiles nanocomposites, le mica etc.

Les charges minérales sont ajoutées de préférence dans une proportion de 2 à 20% en poids, une teneur de 5 à 15% étant particulièrement préférée.

La fonction supposée des charges minérales est de jouer un rôle capacitif grâce à leur constante diélectrique élevée. Par ailleurs, elles permettent de stocker les charges électriques.

Dans la composition selon l'invention, la surface spécifique élevée contribue donc à une amélioration considérable de la résistance à l'effet Corona. Ainsi, des charges minérales présentent une surface spécifique supérieure à 40 m²/g sont préférées.

En outre, une porosité élevée est avantageuse dans la mesure où elle permet de piéger les charges électriques.

Les propriétés rhéologiques et autres du vernis obtenu peuvent être modifiées de façon habituelle.

Cette composition peut être utilisée comme vernis d'isolation pour des fils de bobinage.

L'invention a également pour objet un procédé de fabrication de la composition définie ci-avant, comprenant les étapes suivantes :
- copolymérisation de la résine thermoplastique ou thermodurcissable avec au moins un alkoxysilane ;
- addition d'une charge minérale choisie parmi les composés du B, Al, Ti, Zn, Zr, Cr, Fe, les silicates ainsi que leurs mélanges ; et
- homogénéisation.

Dans la plupart des applications, on souhaite un vernis de basse viscosité. Dans ces cas, il est avantageux d'ajouter un solvant. Pour les polymères de type polyimide, polyester imide et polyamide imide, les solvants adaptés sont les solvants crésyliques tels que l'ortho-crésol, le méta-crésol, le para-crésol, l'acide crésylique, les phénols, la N-méthylpyrrolidone et le diméthylacétamide (DMAC) ainsi que leurs mélanges, et sont particulièrement avantageux.

La réaction entre la partie organique, à savoir le polymère, et la partie minérale, l'alkoxysilane, peut être conduite en présence d'un catalyseur. Cette réaction est menée de préférence avec l'acide para-toluène sulfonique (pTSA), le dibutylétain Bu₂SnO ou les polysiloxanes. De tels polysiloxanes comprennent par exemple le polydiméthyl siloxane, le silikophen ® ou le silikoftal ® (tous deux commercialisé par la société TEGO).

L'invention a aussi pour objet un procédé de fabrication d'un fil de bobinage comprenant les étapes suivantes :
- application sur le fil d'un vernis comprenant la composition telle que définie ci-avant,
- puis durcissement du vernis.

L'invention porte en outre sur le fil de bobinage obtenu selon ce procédé de fabrication et sur une bobine comprenant un tel fil conducteur recouvert d'un tel vernis.

La résine est modifiée par addition de composés minéraux de manière connue. On peut trouver par exemple dans le brevet WO-98 25277 des indications quant aux composés utiles et la marche à suivre pour la mise en oeuvre.

Le fil conducteur, en métal tel que le cuivre ou l'aluminium est enduit du vernis selon l'invention de manière classique puis séché. De manière particulièrement avantageuse, le vernis peut être appliqué directement sur le fil. Il est cependant également possible de l'appliquer sur le fil déjà muni d'une couche de composition servant par exemple à améliorer l'adhérence. Un tel revêtement peut être effectué par exemple avec du tris(2-hydroxyéthyl) isocyanurate (THEIC). Ensuite, le vernis est durci, de préférence par un traitement thermique. Cependant, d'autres traitements sont envisageables, par exemple avec de la lumière ultraviolette. De même, le fil de bobinage enduit de vernis selon l'invention peut être recouvert ensuite de couches additionnelles.

L'invention sera expliquée plus en détail ci-après à l'aide des exemples de modes de réalisation donnés à titre illustratif et nullement limitatif.

### EXEMPLE 1

On prépare un polyesterimide (PEI) dans des solvants crésyliques par réaction entre une diamine telle que la méthylène dianiline (MDA) et de l'anhydride trimellitique (TMA) et d'un polyester aromatique hydrolysé.

Ce polyesterimide est modifié par addition de 10 à 50% d'alkoxysilane tel que le tétraéthoxysilane (TEOS), le triméthoxysilane, l'aminopropyl-triméthylsilane en présence ou non d'un catalyseur tel que l'acide pTSA, le dibutylétain Bu₂SnO ou un polysiloxane tel que le polydiméthylsiloxane, le silikophen ® ou le silikophtal ®.

On ajoute ensuite 2 à 20% en poids par rapport à la teneur en solides de la solution de charge minérale telle que le TiO₂, le Al₂O₃, le ZnO₂, le BN, les argiles, les argiles nanocomposites, et le mica et on mélange jusqu'à homogénéisation.

### EXEMPLE 2

On prépare un polyesterimide (PEI) dans des solvants crésyliques par réaction entre un diisocyanate tel que le méthylène diisocyanate (MDI) et l'anhydride trimellitique (TMA) suivie d'une estérification ou transestérification en présence de composés possédant 2 ou plus de 2 liaisons hydroxyle, tels que le tris(2-hydroxyéthyl) isocyanurate (THEIC, les dialcools, glycols).

Ce polyesterimide est modifié par addition de 10 à 50% d'alkoxysilane tel que le tétraéthoxysilane (TEOS), le triméthoxysilane, l'aminopropyl-triméthylsilane en présence ou non d'un catalyseur tel que l'acide pTSA, le dibutylétain Bu₂SnO ou un polysiloxane tel que le polydiméthylsiloxane, le silikophen ® ou le silikophtal ®.

On ajoute ensuite 2 à 20% en poids par rapport à la teneur en solides de la solution de charge minérale telle que le TiO₂, le Al₂O₃, le ZnO₂, le BN, les argiles, les argiles nanocomposites, et le mica et on mélange jusqu'à homogénéisation.

### EXEMPLE 3

On prépare un polyamide imide (PAI) dans des solvants du type N-méthylpyrrolidone (NMP) ou diméthylacétamide (DMAC) par réaction entre un disocyanate tel que le méthyldiisocyanate (MDI) et l'anhydride trimellitique (TMA).

Ce polyamide imide est modifié par addition de10 à 50% d'alkoxysilane tel que le tétraéthoxysilane (TEOS), le triméthoxysilane, l'aminopropyl-triméthylsilane en présence ou non d'un catalyseur tel que l'acide pTSA, le dibutylétain Bu₂SnO ou un polysiloxane tel que le polydiméthylsiloxane, le silikophen ® ou le silikophtal ®.

On ajoute ensuite 2 à 20% en poids par rapport à la teneur en solides de la solution de charge minérale telle que le TiO₂, le Al₂O₃, le ZnO₂, le BN, les argiles, les argiles nanocomposites, et le mica et on mélange jusqu'à homogénéisation.

### EXEMPLE 4

Un polyimide de type Pyrel M® (disponible chez E.I. Dupont de Nemours & Co.) est modifié par addition de 10 à 50% d'alkoxysilane tel que le tétraéthoxysilane (TEOS), le triméthoxysilane, l'aminopropyl-triméthylsilane en présence ou non d'un catalyseur tel que l'acide pTSA, le dibutylétain Bu₂SnO ou un polysiloxane tel que le polydiméthylsiloxane, le silikophen ® ou le silikophtal ®.

On ajoute ensuite 2 à 20% en poids par rapport à la teneur en solides de la solution de charge minérale telle que le TiO₂, le Al₂O₃, le ZnO₂, le BN, les argiles, les argiles nanocomposites, et le mica et on mélange jusqu'à homogénéisation.

Les vernis obtenus selon les exemples 1 à 4 sont appliqués sur des fils de bobinage de diamètre normalisé par l'IEC ou la NEMA, par une des techniques connues, par exemple par enduction multiple ou par pulvérisation.

De préférence, l'épaisseur de la couche de vernis est de grade 1, 2 ou 3 selon la classification de l'IEC 60 317-0-1 ou de classe single heavy ou triple dans la classification selon NW 1000 de la NEMA .

Les fils de bobinage ainsi obtenus ont été testés dans des conditions simulant leur utilisation par exemple dans des bobines pour des convertisseurs et variateurs de fréquences.

Les résultats montrent que les fils de bobinage selon l'invention présentent une résistance améliorée à une tension crête à crête allant jusqu'à 3 kV pour une fréquence allant jusqu'à 20 kHz avec un temps de montée allant jusqu'à 1 kV/µs à une température allant jusqu'à 180°C.

## Revendications

1. Composition comprenant :
(a) un copolymère obtenu à partir d'une résine thermoplastique ou thermodurcissable choisie parmi le groupe comprenant le polyamide imide (PAI), le polyester imide (PEI), le polyimide (PI), le polyvinylacétal (PVA) et leurs mélanges et contenant au moins un alkoxysilane ; et
(b) une charge minérale choisie parmi les composés du B, Al, Ti, Zn, Zr, Cr, Fe, les silicates ainsi que leurs mélanges.

2. Composition selon la revendication 1, dans laquelle le copolymère est obtenu par addition de 10 à 50%, de préférence 20 à 40% en poids d'alkoxysilane.

3. Composition selon l'une des revendications 1 ou 2, dans laquelle l'alkoxysilane est choisi parmi les tétraalkoxysilanes, tels que le tétraéthoxysilane (TEOS), et les trialkoxysilanes tels que le triméthoxysilane ou l'aminopropyl-triméthoxysilane.

4. Composition selon l'une des revendications 1 à 3, dans laquelle la charge minérale est choisie parmi les oxydes ou les nitrures de B, Al, Ti, Zn, Zr, Cr ou Fe, et est de préférence le dioxyde de titane.

5. Composition selon l'une des revendications 1 à 3, la charge minérale est choisie parmi les silicates tels que les argile, les argiles nanocomposites ou le mica.

6. Composition selon l'une des revendications 1 à 5 comprenant 2 à 20% en poids, et de préférence 5 à 15% en poids de charge minérale.

7. Composition selon l'une des revendications 1 à 6, dans laquelle la charge minérale a une surface spécifique supérieure à 40 m²/g.

8. Vernis d'isolation pour fil de bobinage **caractérisé en ce qu'**il comprend une composition selon l'une des revendications 1 à 7.

9. Procédé de fabrication d'une composition selon l'une des revendications 1 à 7, comprenant les étapes suivantes :
- copolymérisation de la résine thermoplastique ou thermodurcissable avec au moins un alkoxysilane ;
- addition d'une charge minérale choisie parmi les composés du B, Al, Ti, Zn, Zr, Cr, Fe, les silicates ainsi que leurs mélanges ; et
- homogénéisation.

10. Procédé selon la revendication 9, dans lequel la synthèse est réalisée dans un solvant choisi parmi l'ortho-crésol, le méta-crésol, le para-crésol, l'acide crésylique, la N-méthylpyrrolidone et le diméthylacétamide (DMAC) et leurs mélanges.

11. Procédé selon la revendication 9 ou 10, dans lequel la réaction est conduite en présence d'un catalyseur choisi parmi l'acide pTSA, le dibutyl d'étain ou un polysiloxane.

12. Procédé de fabrication d'un fil de bobinage comprenant les étapes suivantes :
- application d'un vernis comprenant une composition selon l'une des revendications 1 à 7 sur le fil;
- durcissement du vernis.

13. Fil de bobinage obtenu par le procédé selon la revendication 12.

14. Bobine comprenant un fil conducteur recouvert d'un vernis comprenant une composition selon l'une des revendications 1 à 7.

## Patentansprüche

1. Zusammensetzung, enthaltend:
(a) ein Copolymer, das aus einem thermoplastischen oder duroplastischen Harz erhalten wird, das ausgewählt ist aus der Gruppe, die Polyamidimid (PAI), Polyesterimic (PEI), Polyimid (PI), Polyvinylacetal (PVA) und ihre Mischungen umfasst und wenigstens ein Alkoxysilan enthält; und
(b) einen mineralischen Zusatzstoff, der aus den Verbindungen von B, Al, Ti, 2n, Zr, Cr, Fe, den Silikaten sowie ihren Mischungen ausgewählt ist.

2. Zusammensetzung nach Anspruch 1, bei der das Copolymer durch Zugabe von 10 bis 50 Gew.-%, vorzugsweise 20 bis 40 Gew.-% Alkoxysilan erhalten wird.

3. Zusammensetzung nach einem der Ansprüche 1 oder 2, bei der das Alkoxysilan ausgewählt ist aus Tetraalkoxysilanen, wie beispielsweise Tetraethoxysilan (TEOS), und Trialkoxysilanen, wie beispielsweise Trimethoxysilan oder Aminopropyltrimethoxysilan.

4. Zusammensetzung nach einem der Ansprüche 1 bis 3, bei der der mineralische Zusatzstoff aus den Oxiden oder Nitriden von B, Al, Ti, Zn, Zr, Cr oder Fe ausgewählt ist und vorzugsweise Titandioxid ist.

5. Zusammensetzung nach einem der Ansprüche 1 bis 3, bei der der mineralische Zusatzstoff aus Silikaten, wie beispielsweise Tonen, Nanoverbund-Tonen oder Glimmer ausgewählt ist.

6. Zusammensetzung nach einem der Ansprüche 1 bis 5, die 2 bis 20 Gew.-% und vorzugsweise 5 bis 15 Gew.-% mineralischen Zusatzstoff aufweist.

7. Zusammensetzung nach einem der Ansprüche 1 bis 6, bei der der mineralische Zusatzstoff eine spezifische Oberfläche aufweist, die größer als 40 m²/g ist.

8. Isolierlack für Spulendraht, **dadurch gekennzeichnet, dass** er eine Zusammensetzung nach einem der Ansprüche 1 bis 7 aufweist.

9. Herstellungsverfahren für eine Zusammensetzung nach einem der Ansprüche 1 bis 7, enthaltend die folgenden Schritte:
- Copolymerisaticn des thermoplastischen oder duroplastischen Harzes mit wenigstens einem Alkoxysilan;
- Zugabe eines mineralischen Zusatzstoffs, der aus Verbindungen von B, Al, Ti, Zn, Zr, Cr, Fe, Silikaten sowie ihren Mischungen ausgewählt wird; und
- Homogenisierung.

10. Verfahren nach Anspruch 9, bei welchem die Synthese in einem Lösungsmittel ausgeführt wird, das ausgewählt ist aus Ortho-Kresol, Meta-Kresol, Para-Kresol, Kresylsäure, N-Methylpyrrolidon und Dimethylacetamid (DMAC) und ihren Mischungen.

11. Verfahren nach Anspruch 9 oder 10, bei welchem die Reaktion in Anwesenheit eines Katalysators durchgeführt wird, der ausgewählt ist aus PTSA-Säure, Dibutylzinn oder einem Polysiloxan.

12. Herstellungsverfahren für einen Spulendraht, enthaltend die folgenden Stufen:
- Aufbringen eines Lacks, der eine Zusammensetzung gemäß einem der Ansprüche 1 bis 7 aufweist, auf den Draht;
- Aushärten des Lacks.

13. Spulendraht, erhalten durch das Verfahren gemäß Anspruch 12.

14. Spule, enthaltend einen leitenden Draht, der mit einem Lack überzogen ist, der eine Zusammensetzung gemäß einem der Ansprüche 1 bis 7 aufweist.

## Claims

1. A composition comprising:
(a) a copolymer obtained from a thermoplastic or thermosetting resin selected from the group comprising polyamide imide (PAI), polyester imide (PEI), polyimide (PI), polyvinylacetal (PVA) and mixtures thereof and containing at least one alkoxysilane; and
(b) an inorganic filler selected from compounds of B, Al, Ti, Zn, Zr, Cr, Fe, silicates as well as mixtures thereof.

2. The composition according to claim 1, wherein the copolymer is obtained by adding 10 to 50%, preferably 20 to 40% by weight of alkoxysilane.

3. The composition according to any of claims 1 or 2, wherein alkoxysilane is selected from tetraalkoxysilanes, such as tetraethoxysilane (TEOS), and trialkoxysilanes such as trimethoxysilane or aminopropyl-trimethoxysilane.

4. The composition according to any of claims 1 to 2, wherein the inorganic filler is selected from oxides or nitrides of B, Al, Ti, Zn, Zr, Cr or Fe, and preferably is titanium dioxide.

5. The composition according to any of claims 1 to 3, the inorganic filler being selected from silicates such as clays, nanocomposite clays, or mica.

6. The composition according to any of claims 1 to 5, comprising 2 to 20% by weight and preferably 5 to 15% by weight of inorganic filler.

7. The composition according to any of claims 1 to 6, wherein the inorganic filler has a specific surface area larger than 40 m²/g.

8. An insulation varnish for a magnet wire, **characterized in that** it comprises a composition according to any of claims 1 to 7.

9. A Method for making a composition according to any of claims 1 to 7, comprising the following steps:
- copolymerization of the thermoplastic or thermosetting resin with at least one alkoxysilane;
- addition of an inorganic filler selected from compounds of B, Al, Ti, Zn, Zr, Cr, Fe, silicates as well as mixtures thereof; and
- homogenization.

10. The method according to claim 9, wherein the synthesis is performed in a solvent selected from orthocresol, meta-cresol, para-cresol, cresylic acid, N-methylpyrrolidone, and dimethylacetamide (DMAC) and mixtures thereof.

11. The method according to claim 9 or 10, wherein the reaction is conducted in the presence of a catalyst selected from pTSA acid, dibutyl tin, or a polysiloxane.

12. A method for manufacturing a magnet wire comprising the following steps:
- applying a varnish comprising a composition according to any of claims 1 to 7 on the wire;
- hardening of the varnish.

13. A magnet wire obtained by the method according to claim 12.

14. A coil comprising a conducting wire covered with a varnish comprising a composition according to any of claims 1 to 7.
